**Europäisches Patentamt**

**European Patent Office**

**Office européen des brevets**

(19)

(11) Publication number: **0 240 949**
**A2**

(12) # EUROPEAN PATENT APPLICATION

(21) Application number: **87104964.9**

(51) Int. Cl.³: **G 01 C 19/64**

(22) Date of filing: **03.04.87**

(30) Priority: **07.04.86 US 848540**

(43) Date of publication of application:
**14.10.87 Bulletin 87/42**

(84) Designated Contracting States:
**DE FR GB**

(71) Applicant: **HONEYWELL INC.**
**Honeywell Plaza**
**Minneapolis Minnesota 55440(US)**

(72) Inventor: **Demma, Nick A.**
**1414-7th Street S.E.**
**Minneapolis, MN 55418(US)**

(72) Inventor: **Killpatrick, Joseph E.**
**2901-32nd Avenue N.E.**
**Minneapolis, MN 55418(US)**

(72) Inventor: **Sanders, Glen A.**
**5230 Cottonwood Lane**
**Plymouth, MN 55442(US)**

(74) Representative: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Passive ring resonator angular rate sensor.**

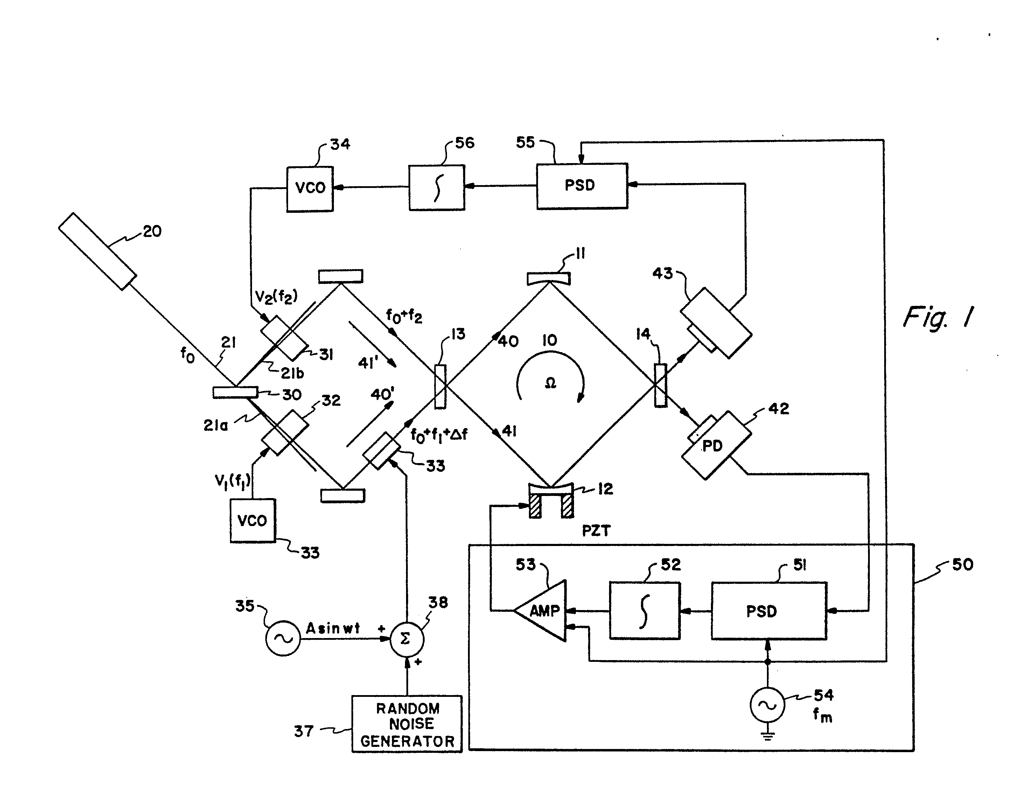

(57) A passive ring resonator angular rate sensor includes a pair of beams (40, 41) injected into a passive resonator (10). Biasing means (33, 35, 38) serve to modulate the frequency difference between said first and second beams and further means (37) serve to randomize said modulation of said frequency difference in order to reduce the light scattering effects in said sensor (Fig. 1).

EP 0 240 949 A2

./...

Fig. I

HONEYWELL INC.

Honeywell Plaza

Minneapolis, MN 55440 USA

April 2, 1987

A4111789 EP

Hz/ep

## Passive Ring Resonator Angular Rate Sensor

This invention relates to a passive ring resonator angular rate sensor according to the preamble of claim 1.

Passive cavity laser angular rate sensors are well known and illustrated, for example, in US-A 4,135,822. Briefly, in such sensors, an electromagnetic wave is coupled to a passive ring resonator so as to cause counter-propagating waves therein. Since rotation affects the optical cavity closed-loop path length in proportion to rotation, the resonant frequency of the waves is affected in relation to the rotation rate. If the frequency is fixed, the amplitude or intensity of the counter-propagating waves is affected in relation to the rotation rate. In the above cited US-A, the magnitude and direction of an inertial rotation is determined by adjusting the frequency of each counter-propagating electromagnetic wave to the corresponding cavity resonant frequency in each direction. The amount of adjustment may then be used as a measurement of rotation rate. There are, of course, other schemes for determining the rotation rate in such sensors.

The advancement of the art of passive laser angular rate sensors now include optical fibers, semiconductor waveguides, and the like, as the means for providing the passive cavity.

It is the object of the present invention to reduce errors due to light back scattering at the mirrors. This object is achieved according to the characterizing features of claim 1. Further advantageous embodiments of the invention may be taken from the sub-claims.

With respect to the figures of the attached drawings the invention shall be further described, where

Figure 1 is a schematic block diagram of a passive cavity laser angular rate sensor in accordance with the present invention.

Figure 2 shows another schematic block diagram of another embodiment of a passive cavity angular rate sensor in accordance with the present invention.

Shown in Figure 1 is substantially the schematic diagram of the passive ring resonator rotation sensor shown and described in a publication

entitled, <u>Passive Ring Resonator Method for Sensitive Inertial Rotation Measurements in Geophysics and Relativity</u>, by G.A. Sanders, M.G. Prentiss, and S. Ezekial, Optic Letters, Nov. 1981, Vol. 6, No. 11. This article is incorporated herein by reference thereto. Shown in Figure 1 is a square ring resonator 10 including two spherical maximum-reflectivity mirrors 11 and 12, and two 99%-reflectivity flat mirrors, 13 and 14, used for coupling into and out of the cavity 10. Source 20 provides an electromagnetic wave $f_o$ such as a laser beam. Beam 21 is split into two beams 21a and 21b by way of beam splitter 30. Beam 21a is shifted in frequency by an acousto-optic modulator 32 to provide beam 40', and beam 21b is shfited in frequency by acousto-optic modulator 31 to produce beam 41'. Beams 40' and 41' are coupled into resonator 10. Beam 40' passes through mirror 13 to produce beam 40 in a clockwise direction of cavity 10, and beam 41' also passes through mirror 13 to produce beam 41 in the counter-clockwise direction of cavity 10. Beam 40 propagating in the clockwise direction in cavity 10 has frequency $f_o$ shifted by a fixed frequency $f_1 + \Delta f$, and the counter-clockwise beam 41 has frequency $f_o$ shifted by $f_2$. The shift frequencies $f_1$ and $f_2$ are provided by a voltage

-4-

controlled oscillator (VCO) 33 connected to
acousto-optic modulator 32, and VCO 34 connected to
acousto-optic modulator 31, respectively. Shift
frequency $\Delta f$ is produced by sinusoid drive source 35
through signal summing means 38.

The frequency shift $\Delta f$ produced by modulator
33 will be described in further detail. The frequency
shift $\Delta f$ is utilized for reducing scattering errors
as will be subsequently described. However, in the
following discussions, the resonant frequencies of
cavity 10 will be described in terms of frequencies
$f_1$ and $f_2$ substantially produced by the
acousto-optic modulators 32 and 31, respectively.

Flat mirror 14 provides a portion of beam 40
to impinge on photodetector 42 and a portion of beam
41 to impinge on photodetector 43. The position of
mirror 12 is mounted on a PZT crystal for
cavity-length adjustment. The PZT device is capable
of controlling the cavity length of resonator 10. The
PZT is controlled by a feedback control circuit 50
including a phase sensitive demodulator 51, integrator
52, summing amplifier 53, and source 54 providing a
modulation frequency $f_m$. Feedback control circuit
50 locks the clockwise resonance frequency to the
laser frequency $f_0 + f_1$ via the PZT crystal.

-5-

In operation, the output of detector 42 is demodulated by demodulator 51 at frequency $f_m$ (36 kHz) and then passed through integrator 52 followed by a voltage summing amplifer which drives the PZT coupled to mirror 12. The system adjusts the cavity so that frequency $f_0 + f_1$ is resonant frequency. This is accomplished by the intensity peak detecting control circuit 50.

A second feedback control circuit is shown including a phase sensitive demodulator 55, integrator 56, and voltage controlled oscillator 34. The second feedback control circuit adjusts frequency $f_2$ by means of acousto-optic modulator 31 so that $f_0 + f_2$ is locked to the center of the counter-clockwise resonance of the cavity.

In operation, demodulator 55 demodulates the output of photodtectors 43 at the modulation frequency $f_m$ of source 54. The output is integrated by integrator 56 to drive the voltage controlled oscillator 34. The output of VCO 34 is applied to modulator 31 to adjust $f_2$ as required. If there is no inertial rotation (or any other noise or bias source) the clockwise and counter-clockwise resonant frequencies of the cavity are identical and, therefore, $f_1 = f_2$. In the presence of inertial

rotation, $f_{cw}$ and $f_{ccw}$ will be separated by a frequency, $f_1 - f_2$, which is an indication of the rotation rate. Furthermore, the measurement of $f_1 - f_2$ is also an indication of the difference frequency $f_{cw} - f_{ccw}$ which is related to the rotation rate by a scale factor. In ideal circumstances, with no inertial rotation input, the frequency of beams 40 and 41 are identical. Accordingly, frequencies $f_1$ and $f_2$ are also identical.

As noted in the paper by Sanders, et al cited above, the passive cavity sensor includes a source of error due primarily, among others, to back scattering from the cavity mirrors and scattering in all the acousto-optic transducers. This results in an oscillatory non-reciprocal frequency shift at the difference frequencies $f_2 - f_1$. This error source, as taught by Sanders, et al, was reduced by the addition of the acousto-optic modulator 33 which inserted a modulating frequency difference or bias signal $\Delta f$. This resulted in the frequency difference varying by a modulating value of $\Delta f$. The modulating frequency shift $\Delta f$ is intended to be small. This small shift can be produced by the acousto-optic modulator 33 or a phase modulator as illustrated in the Sanders, et al paper. The modulator is driven by a periodic modulating signal such as sinusoidal drive voltage signal.

In the present invention, as illustrated in Figure 1, the acousto-optic modulator 33 is driven by the sum of a sinsusoidal drive signal 35 and a random noise generator 37 produced by summing circuit 38. The combination of a sinsusoidal signal and the random noise generator 37 produces a frequency difference bias signal between the frequency difference $f_1$ and $f_2$ which not only modulates the frequency difference between the beams 40 and 41, but also randomizes the modulation. The combination of the modulation and the randomization of that modulation substantially reduces the sources of rotation error caused by the back scatter of the mirrors and optical error terms caused by the acousto-optic modulators.

Random noise generator 37 may be provided by a wide variety of sources including a white noise generator, a diode noise generator or a pseudo-random noise generator, or the like.

It should be noted by those skilled in the art, that the passive cavity resonator of Figure 1 is of the type where the resonator is fined-tuned to one of the frequencies, namely $f_1$, and the frequency

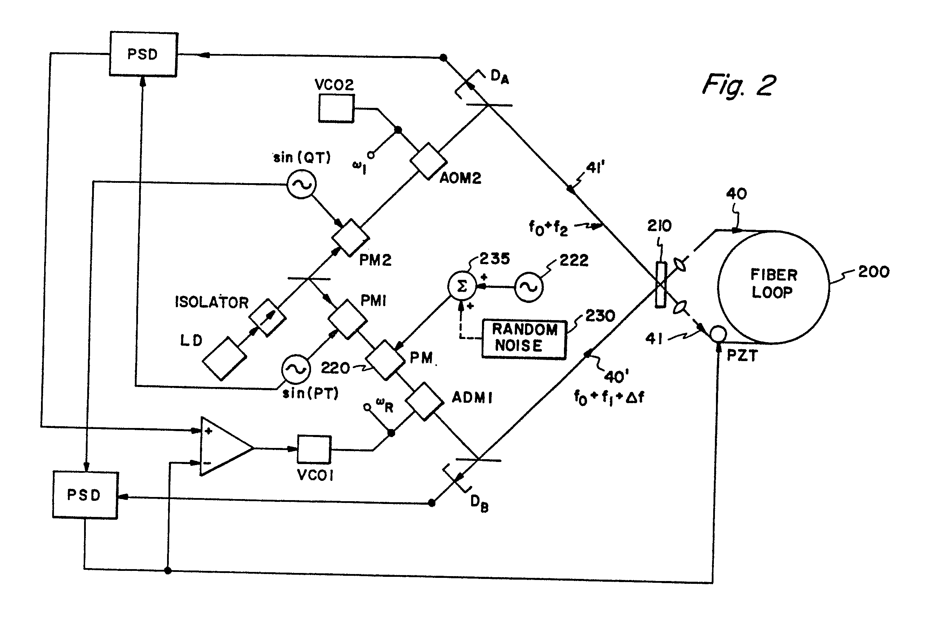

$f_2$ is controlled to obtain the resonant frequency due to rotation. The frequency difference between frequecies $f_2$ and $f_1$ being that indicative of the rotation rate. The circuit of Figure 2 illustrates another form of the invention in which the passive resonator includes a fiber optic loop. This variation of the passive cavity resonator system is particularly described in Applied Optics, Vol. 23, Nov. 1, 1984, in an article entitled Effect of Rayleigh Back Scattering in an Optical Passive Ring-Resonator Gyro, by Iwatsuki, Hotate, and Higashiguchi. This article is also incorporated herein by reference thereto. Figure 2 particularly shows a pair of beams 40' and 41' injected into a fiber optic closed-loop resonator 200 including a reflection means 210 for coupling beams 40' and 41' into the loop 200. Optical means 210 also forms in part the closed-loop optical cavity by allowing beams 40 and 41 to circulate through the closed-loop of the optical fiber 200. Like the Sanders publication, Iwatsuki also includes a phase modulator 220 driven by a sinsusoidal source 222. In the present invention, like Figure 1, a random noise generator 230 is added to the circuit of Iwatsuki in order to substantially eliminate the affects of back scattering. The combination, as indicated earlier, of both the sinusoidal modulation of the frequency difference of beams 40' and 41' and the means for randomizing the modulation provides substantial reduction of the back scattering and error source in the passive cavity sensor in both the rectangular closed-loop path and the fiber optic closed-loop path.

It should be recognized by those skilled in the art, that the resonators or cavities may include optical fibers, semiconductors, or other light reflection systems and the like.  While only certain particular embodiments have been described in detail herein, it will be apparent to those familiar with the art that certain changes and modifications can be made without departing from the scope of the invention as defined by the following claims.

It should be specifically recognized that there exists a wide variation of control circuit schemes to obtain the intended function as those shown herein.  Specifically, circuit 100 is shown responsive to the inputs to the VCO's 31 and 32, namely

frequencies $f_1$ and $f_2$.  A more precise beat frequency of those beams impinging on photodetectors 42 and 43.  Furthermore, many of the techniques shown with reference to Figures 1 and 2 are shown in analog form, nevertheless, they may be provided by well-known digital techniques.  These digital techniques including microprocessors and the like.

Claims:

1. A passive ring resonator angular rate sensor comprising:

passive resonator means (10) permitting the propagation of at least one pair of beams of electromagnetic energy in opposite directions along a closed-loop path, said resonator having a characteristic resonant beam frequency in each of said first and second directions as a function of the rotation of said closed-loop path;

source means (20, 30) for generating first and second beams (40', 41') of electromagnetic energy; and

means. (13) for introducing a third beam (40) derived from said first beam to propagate in said first direction of said resonator means and a fourth beam (41) derived from said second beam to propagate in said second direction of said resonator means; c h a r a c t e r i z e d   b y :

biasing means (33, 35, 38) for modulating the frequency difference between said first and second beams (40', 41'); and

-11-

means for randomizing (37) said modulation of said frequency difference.

2. Sensor according to claim 1, c h a r a c - t e r i z e d   i n   t h a t  said passive resonator means includes an optical fiber (200).

3. Sensor according to claim 1, c h a r a c - t e r i z e d   i n   t h a t  said source means is a laser beam generator (20).

4. Sensor according to claim 1, c h a r a c - t e r i z e d   i n   t h a t said first and second beams (40', 41') are modulated by a sinusoidal signal source (35) to produce said modulating frequency difference.

5. The sensor according to claim 1, c h a r a c - t e r i z e d   i n   t h a t  said source means (20) includes a laser beam (21) impinging upon a beam splitter (30) thereby splitting said laser beam and generating said first and second beams (40', 41').

6. Sensor according to claim 1, c h a r a c - t e r i z e d   b y:
means (12, 50, 42) responsive to said third beam (40) for altering said closed-loop path to maintain said third beam frequency at the resonant frequency in said first direction; and

means (43, 55, 56, 34, 31) responsive to said fourth beam (41) for controlling the frequency of said second beam (41') to maintain the frequency of said fourth beam (41) at resonant frequency in said second direction of said passive resonator means.

1/2

Fig. I

Fig. 2